# EUROPEAN PATENT SPECIFICATION

(11) **EP 4 139 107 B1**
(45) Date of publication and mention of the grant of the patent: **10.07.2024**
(21) Application number: 21724038.1
(22) Date of filing: 21.04.2021
(51) Int. Cl.: B29C 44/56, B29C 44/58

(54) **METHOD AND PLANT FOR PRODUCING SHEET MATERIAL**
VERFAHREN UND ANLAGE ZUR HERSTELLUNG VON BLATTMATERIAL
MÉTHODE ET INSTALLATION POUR LA PRODUCTION DE MATERIAU EN FEUILLES

(30) Priority: 21.04.2020 IT 202000008521
(43) Date of publication of application: 01.03.2023
(73) Proprietor: Green Foam S.r.L., 59100 Prato (IT)
(72) Inventor: NESI, Marco, 51037 Montale (Pistoia) (IT)
(74) Representative: Firmati, Leonardo
(86) International application number: PCT/IB2021/053279
(87) International publication number: WO 2021/214676

(56) References cited:
- EP-A2- 0 383 077
- WO-A1-99/16593
- CN-A- 104 385 375
- GB-A- 1 151 117
- JP-A- 2004 121 761
- TEC MAC SRL: "Tec Mac homepage", 14 June 2018 (2018-06-14), Via Mattei 32, 28066 Galliate (NO) ITALY, XP002801728, Retrieved from the Internet <URL:https://www.tecmac.com> [retrieved on 20210119]

## Description

### Technical field

This invention relates to a plant for producing sheet material.

In particular, the invention relates to a plant for producing sheet material starting from a block of foam made of viscoelastic material.

The invention also relates to a method of producton of sheet material.

### Background art

Foam made of viscoelastic material is a material increasingly used both for furniture and home accessories, especially for mattresses and pillows.

For example, layers with a thickness of a few centimetres are used in the composition of mattresses in addition to other materials or also in the production of quilts. Large sheets of foam are therefore used for these products so as to minimise the inevitable rejects which would occur with a production in sheets.

The production of large sheets of viscoelastic foam is therefore obtained by means of the so-called continuous foaming which comprises the emission of foam from respective outlets on an underlying belt conveyor.

It is basically a sort of continuous extrusion which, however, has several drawbacks.

A first drawback is due to the fact that the openings emit the viscoelastic material in fluid form which immediately after dispensing starts the expansion step to reach the desired final size. Since the upper surface of the sheet being formed (and expanding) is free, it will have many imperfections basically due to the bubbles of gas which emerge on the surface and also the fact that expansion, since it is free, will not be exactly uniform over the entire surface.

Another drawback connected to the continuous foaming is due to the need to clean the nozzles which forces the operators to interrupt the dispensing after a predetermined quantity of material dispensed. Currently, the maximum standard length of a sheet obtained with continuous foaming is approximately 30 linear metres.

The prior art production systems are not generally satisfactory also due to the large waste of material due to the finishing of the sheets necessary for their easy use.

Cutting units are also currently known to obtain a continuous belt of sheet material from a block of expanded viscoelastic material.

In these prior art units, the above-mentioned block is rotated by simultaneously engaging with a cutting blade, basically reproducing the functionality of a lathe. These units have the drawback of not allowing an optimum use of the material because, for example, the corners of the blocks which normally have the shape of a parallelepiped are rejected.

Document XP002801728,retreived from the Internet, URL: https:// www.tecmac.com representing the closest prior art discloses the preamble of claim 1.

### Aim of the invention

The aim of the invention is to provide a plant for producing sheet material which is able to overcome the drawbacks of the prior art and which is at the same time practical to use and simple and inexpensive to make.

A further aim is to provide a plant for producing sheet material which allows the waste of material to be minimised and at the same time guarantees high levels of production. Yet another aim of the invention is to provide a method for producing sheet material which is effective and practical and inexpensive to implement. According to the invention, these aims and others are achieved by a plant and a method for producing sheet matrial comprising the technical features described in the accompanying claims.

### Brief description of the drawings

The technical features of the invention, according to the above-mentioned aims, are clearly described in the appended claims and its advantages are apparent from the detailed description which follows, with reference to the accompanying drawings which illustrate a nonlimiting example embodiment of it, and in which:
- Figure 1 is a schematic perspective view of a first particular portion of the plant for producing sheet material according to the invention;
- Figure 2 is a schematic front elevation view of a second portion of the plant for producing sheet material according to the invention;
- Figure 3 is a schematic plan view from above of the plant for producing sheet material of Figure 2;
- Figure 4 is a schematic side elevation view of a thrd portion of the plant for producing sheet material according to the invention.

### Detailed description of preferred embodiments of the invention

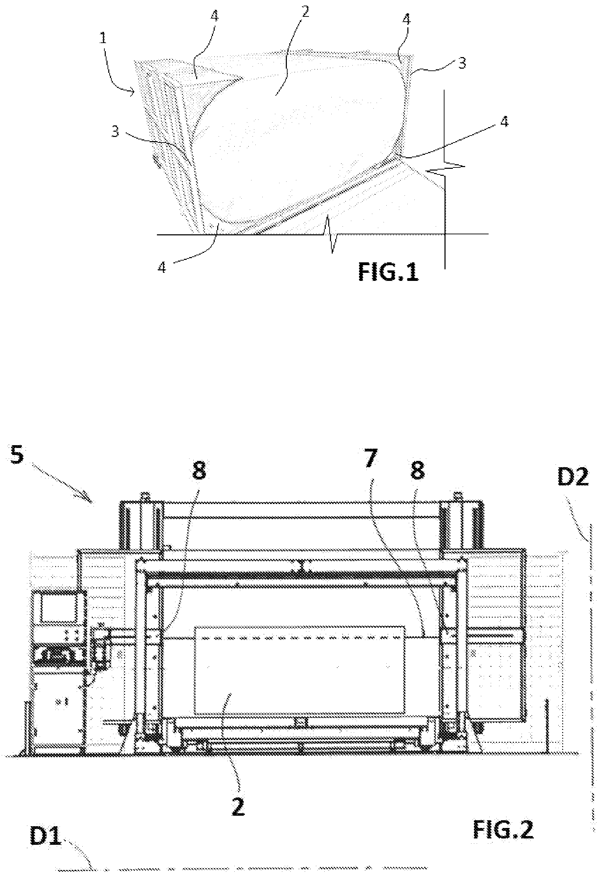

As illustrated in Figure 1, the plant for producing sheet material according to the invention comprises a parallelepiped box, denoted by the reference numeral 1, for forming a block 2 of foam made of viscoelastic material.

The forming box 1 is box-shaped and has a base and four side walls 3 which can be opened and/or removed to facilitate extraction of the block 2 of foam made of viscoelastic material.

The block 2 of foam made of viscoelastic material, hereinafter denoted for brevity also merely as a block 2, is made starting from a predetermined quantity of viscoelastic material in fluid form.

The expression "predetermined quantity" means a quantity, expressed in terms of volume or weight, such as to generate, at the end of the foam expansion step, the complete and precise filling of the forming box 1. The steps of preparing the mixture of viscoelastic material in fluid form and subsequent filling of the tipper body are not described in further detail below. Similarly, although theoretically forming part of the plant according to the invention, the dispensing station designed to dispense the viscoelastic material in fluid form inside the forming box 1 is not described.

As clearly illustrated in Figure 1, inside the body 1 are positioned, along four horizontal edges of the parallelepiped defined by it, respective four forming cores 4.

The forming cores 4 have an approximately prismatic shape with a triangular base, with the hypotenuse of the triangle which, however, is curved, so as to form a curved surface designed to round the corners of the foam block generated inside the box 1.

In other words, with reference to Figure 1, the presence of the forming cores 4 inside the box 1 means that the foam block 2 adopts, following its expansion inside the box 1, a shape which is not parallelepiped but, rather, such as to approximate a cylinder with an elliptic base. The advantages of this rounding of the edges of the box and of the relative block 1 resulting therefrom will be more apparent in the description below.

Advantageously, at least the two upper forming cores 4 are removable so as to allow an easy extraction of the block 2 of foam from the forming box 1 and an equally easy preparation of the body 1 for a new pouring of material.

According to the preferred embodiment illustrated in the accompanying drawings, the two upper forming cores 4 are connected to two respective side walls 3 to be removed simultaneously with the latter when the forming box 1 is opened to free the block 2 formed.

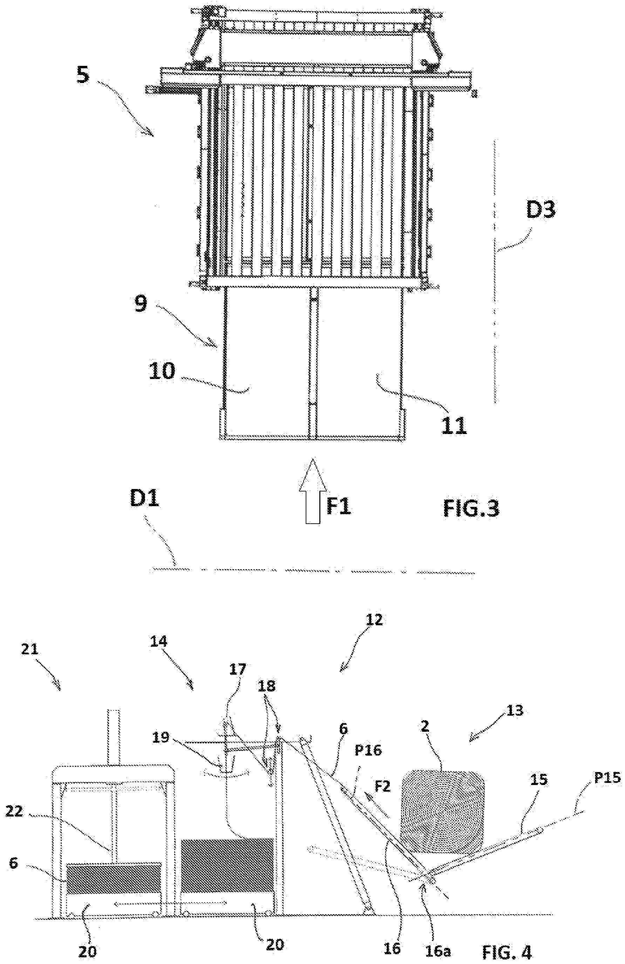

As illustrated in Figures 2 and 3, the production plant according to the invention comprises a pantograph cutter 5, designed to cut the block 1 to obtain a sheet 6, the latter shown in Figure 4.

With reference to Figure 2, the cutter 5 comprises a blade 7 with reciprocating movement, configured for executing a spiral cutting of the block 1, in such a way as to make a continuous sheet 6 from the block 1 with the sheet 6 arranged in a spiral.

The above-mentioned spiral, which follows the relative spiral cut, is shown by way of example in the cut block 2, illustrated in Figure 4.

For the purposes of this description, reference is made to spiral without thereby limiting to the formation of semi-circular coils, since it can also comprises elongate coils with a substantially semi-elliptic shape. Advantageously, the blade 7 is of the wire type since in order to follow the above-mentioned spiral path it is optimal that its transversal dimension is as small as possible.

If the blade were also of the belt type, it could make imperfect cuts in the curved stretches, especially those with a reduced radius of curvature close to the centre of the block 2.

With reference to Figure 2, the blade 7 extends longitudinally along a predetermined horizontal direction D1.

The blade 7 is operatively connected, at its longitudinal ends, to two oscillating heads 8 which impart, to the blade 7, the alternating movement by which it exerts its cutting action on the foam block 2.

The oscillating heads 8, suitably protected by respective guards, are movable in synchrony with each other in a vertical direction D2 at right angles to the above-mentioned predetermined horizontal direction D1 and also according to a direction D3 perpendicular to the plane of Figure 2, and also perpendicular to both the above-mentioned directions D1 and D2.

By using suitable movement means, of substantially known type and not further described, the above-mentioned oscillating heads 8, during the cutting steps, are moved along the directions D2 and D3 in such a way as to move the wire blade 7 along the desired spiral path.

The curved stretches of the spiral are the result of a combination of the respective motions of the oscillating heads 8 according to the two directions D2 and D3.

As illustrated in Figure 3, the plant according to the invention comprises, immediately outside the cutter 5, at its inlet, a base 9 for supporting the foam block 2. The support base 9 is configured to rotate the foam block 2 about a vertical axis, not illustrated, perpendicular to the plane of Figure 3 and to advance the foam block 2 inside the pantograph cutter 5, in the direction of the arrow F1.

Advantageously, the support base 9 comprises a first belt conveyor 10 and a second belt conveyor 11 looped on respective rollers not illustrated.

The first and second belts conveyors 10, 11 are positioned side by side and extend parallel to each other.

The first and second belts conveyor 10, 11 are motor-driven individually to be able to move in directions which are also different to each other.

By means of the different feed motion of the belts 10, 11 it is in fact possible to rotate the foam block 2 substantially on itself, using track means wherein the different rotation of the tracks determines a curved path for the means with a very reduced radius of curvature, tending to zero.

By means, on the other hand, of the same trend as the belts 10, 11, the foam block 2 can be fed along a straight path, specifically in the direction indicated by the arrow F1.

The system according to the invention also comprises an optical device, not illustrated, positioned at the cutter 5 and configured to project, on the block 2 to be cut positioned inside the cutter 5, the image of the spiral path to be followed by the wire blade 7.

In other words, by means of the above-mentioned and not illustrated optical device, an image representing the cutting path (in a spiral shape) which the wire blade 7 will follow is projected on a side wall of the foam block 2.

The projection of the image advantageously allows the operator to optimise the use of the material of the block 2, thereby limiting the rejects.

Advantageously, there is a reciprocal adjustment movement between the image projected and the block 2, so as to position the image and the consequent cutting in the most correct position.

This adjustment movement is advantageously also actuated by means, not illustrated, designed to vary the height above the ground of the block 2 of foam inside the cutter.

The above-mentioned and not illustrated optical device is advantageously of the laser type.

With reference to Figure 4, the plant according to the invention also comprises a unit 12 for conditioning the continuous sheet 6 obtained by the spiral cutting of the foam block 2.

The conditioning unit 12 comprises an unwinding station 13 at which the foam block 2 is positioned which has been cut in a spiral in the cutter 5, the unwinding station 13 being configured to unwind the continuous sheet 6 arranged in the form of a spiral.

The conditioning unit 12 then comprises a layering station 14 positioned immediately downstream of the unwinding station 13, the layering station 14 being configured to arrange the continuous unwound sheet 6 in superposed layers.

Again with reference to Figure 4, the unwinding station 13 comprises two belts conveyors 15, 16 adjacent to each other and having respective planes of extension which are inclined to each other.

More in detail, of the two belt conveyors 15, 16, the belt 15 is positioned fixed, that is to say, with its plane of extension having a fixed inclination relative to the ground, whilst the belt 16 has a relative plane of extension with a variable inclination, in the sense that it can vary its inclination relative to the ground and to the plane of extension of the fixed belt 15.

The planes of extension of the two belt conveyors 15, 16 are both perpendicular to the plane of Figure 4 and Figure 4 shows the respective planes P15, P16 with respective dashed lines.

Advantageously, the belt conveyor 16 with variable inclination is designed to rotate, by respective actuator means not illustrated, about a pivot positioned close to a relative lower end 16a adjacent to the other fixed belt 15.

The inclination of the belt conveyor 16 is selected on the basis of the dimensions and weight of the block 2 of foam to be unrolled, in such a way as to optimise its unwinding.

To cause and facilitate the unwinding of the continuous sheet 6 which makes up the block 2 cut in a spiral, the conditioning unit 12 comprises a bending machine 17, having two rollers of which at least one is motor-driven. The bending machine 17, with the interposition of feed rollers 18, exerts a pulling action on the sheet 6 of the block 2 in the direction of the arrow F2.

The bending machine 17 feeds the unwound sheet 6 to the layering station 14.

The layering station 14 comprises an oscillating arm 19, of substantially known type, configured to impart to the falling sheet 6 an alternating thrust designed to create successive overlapping layers.

The sheet 6, arranged in superposed layers, accumulates on a carriage 20 located below the oscillating arm 19.

As also illustrated in Figure 4, the plant according to the invention advantageously comprises a station 21 for packaging the continuous sheet 6 arranged in superposed layers.

The packaging station 21 comprises a pressing device 22 configured to compress the continuous sheet 6 positioned layers, thus reducing its overall size.

The packaging station 21 also comprises, not illustrated, means designed to wrap the sheet 6 compacted by the pressing device, made of a suitable wrapping material.

Advantageously, the above-mentioned wrapping material comprises a heat-shrink film.

As mentioned, the invention also relates to a method for producing sheet material.

The method comprises the following steps:
- providing a parallelepiped box 1 for forming a block 2 of foam made of viscoelastic material;
- pouring into the above-mentioned box 1 a predetermined quantity of viscoelastic material in fluid form;
- waiting for a predetermined time for the completion of the expansion process and the formation of the block 2 of foam;
- extracting the formed block 2 of foam from the box;
- cutting the block 2 of foam with a continuous cut extending along a spiral path, configured to obtain from the block 2 a continuous sheet with a substantially constant thickness.

The above-mentioned step of providing a parallelepiped forming box 1 comprises the step of arranging within the box 1 a plurality of forming cores 4 suitable for rounding the edges of the above-mentioned parallelepiped.

The above-mentioned step of cutting the foam block 2 is actuated with a wire blade 7 with reciprocating movement. The step of cutting the foam block 2 is advantageously actuated by a pantograph cutter 5 equipped with the above-mentioned wire blade 7.

The step of cutting the block 2 of foam is actuated by moving the wire blade 7 according to the above-mentioned spiral path, with the block 2 of foam kept stationary. Advantageously, the fact of moving the blade 7 relative to the block 2 along the spiral path by means of the movable heads allows a spiral to be made with an elliptical shape, makes it possible to also reach the corner portions of the block 2 with the cutting.

This makes it possible to optimise the cut, reducing the waste material which would occur, for example, making a "circular" spiral cutting obtained, for example, with the prior art cutting units wherein the blade is substantially stationary and it is the block to be rotated.

Also, advantageously, there is the step of projecting on the block 2 to be cut, arranged inside the pantograph cutter 5, the image of the spiral path which the above-mentioned wire blade 7 will follow.

The method also comprises the step of unwinding the continuous sheet 6 positioned in the form of a spiral. The unwinding step is advantageously actuated by an unwinding station 13 comprising two belt conveyors.

The method according to the invention also comprises the step of arranging in superposed layers the continuous sheet 6 unwound in the unwinding station 13.

The plant and the method for producing sheet material according to the invention overcome the above-mentioned drawbacks and achieve important advantages.

A first advantage linked to the invention is due to the fact that it overcomes the problems connected with continuous foaming since the sheet of material is obtained from a block the forming of which is technically simple and does not require lengthy and expensive maintenance activities on the dispensing openings. Another advantage linked to the invention is due to the possibility of obtaining sheets of lengths which are also much greater than those obtained with continuous foaming.

Yet another advantage linked to the invention is due to the limitation of waste material, in particular thanks to the presence of the forming cores which allow a rounding of the edges of the material which moves close to the curvature of the cutting spiral, thereby limiting the material lost due to the curved cutting.

## Claims

1. A plant for producing sheet material, comprising:
- a parallelepiped moulding box (1) for forming a block (2) of viscoelastic foam from a determined quantity of viscoelastic material in fluid form;
- a pantograph cutter (5) comprising a blade (7) with reciprocating movement, configured to perform a spiral cutting of said foam block (2) in such a way as to form a continuous sheet (6) from said foam block (2) with said sheet (6) positioned in the form of a spiral, **characterised in that** said reciprocating blade (7) is movable according to a spiral path whilst said block (2) is kept stationary.

2. The plant according to claim 1, **characterised in that** it comprises a plurality of forming cores (4) arranged within said box (1) and configured to round the edges of the block (2) of foam generated within said box (1).

3. The plant according to claim 2, **characterised in that** said cores (4) of said plurality are at least partially removable.

4. The plant according to any one of the preceding claims, **characterised in that** it comprises a conditioning unit (12) of said continuous sheet (6), said conditioning unit (12) comprising an unwinding station (13) configured to unwind said continuous sheet (6) arranged in a spiral, and a layering station (14) configured to arrange said continuous sheet (6) in overlapping layers.

5. The plant according to claim 4, **characterised in that** said unwinding station (13) comprises two belt conveyors (15, 16) with respective inclined development planes (P15, P16).

6. The plant according to claim 5, **characterised in that** at least one of said two belt conveyors (15, 16) is movable in order to vary the inclination of its own plane (P15, P16) of extension with respect to the plane (P15, P16) of extension of the other of said belt conveyors (15, 16).

7. The plant according to any one of the preceding claims, **characterised in that** it comprises a support base (9) of said block (2) of foam placed at an inlet of said pantograph cutter (5), said support base (9) being configured to rotate said block (2) of foam around a vertical axis and to feed said block (2) of foam inside said pantograph cutter (5).

8. The plant according to any one of the preceding claims, **characterised in that** it comprises an optical device configured to project on said block (2) to be cut the image of the spiral path to be followed by said blade (7).

9. The plant according to any one of the preceding claims, **characterised in that** it comprises a packaging station (21) for the packaging of said continuous sheet (6) arranged in overlapping layers, said packaging station (21) comprising a pressing device (22) configured to compress said continuous sheet (6) positioned in layers, decreasing its overall size.

10. The plant according to any one of the preceding claims, **characterised in that** it comprises two oscillating heads (8) to which are fixed respective longitudial ends of said di blade (7), said oscillating heads (8) being designed to impart on said blade (7) said alternating movement by means of which said blade (7) exerts the relative cutting action on said block (2).

11. The plant according to claim 10, **characterised in that** said oscillating heads (8) are also configured to move said wire blade (7) along said spiral path.

12. A method of production of sheet material, comprising the steps of:
- providing a parallelepiped box (1) for forming a block (2) of foam made of viscoelastic material;
- pouring into said box (1) a predetermined quantity of viscoelastic material in fluid form;
- waiting for a predetermined time for the completion of the expansion process and the formation of the block (2) of foam;
- extracting said formed block (2) of foam from the box;
- cutting said block (2) of foam with a continuous cut extending along a spiral path, configured to obtain from said block (2) a continuous sheet (6) with a substantially constant thickness, **characterised in that** said step of cutting said block (2) with a continuous cut is actuated by a blade (7) with alternating movement and comprises the step of moving said blade (7) with alternating movement according to said spiral path keeping said block (2) stationary.

13. The method according to claim 12, **characterised in that** said step of providing a parallelepiped forming box (1) comprises the step of arranging within said box (1) a plurality of forming cores (4) suitable for rounding the edges of said parallelepiped.

14. The method according to claim 12 or 13, **characterised in that** said step of cutting said foam block (2) is carried out with a wire reciprocating blade (7).

15. The method according to any one of claims 12 to 14, **characterised in that** it comprises the step of unrolling said continuous sheet (6) arranged in a spiral.

## Patentansprüche

1. Anlage zur Herstellung von Plattenmaterial, umfassend:
- einen Formungskasten (1) in Form eines Parallelflachs zum Ausformen eines Blocks (2) aus viskoelastischem Schaum aus einem bestimmten viskoelastischen Material in flüssiger Form;
- ein Kopierwerkzeug (5), umfassend ein Messer (7) mit pendelnder Bewegung, ausgelegt, um ein spiralförmiges Schneiden des Schaumblocks (2) durchzuführen, sodass eine durchgehende Platte (6) aus dem Schaumblock (2) geformt wird, wobei die Platte (6) in der Form einer Spirale positioniert ist, **dadurch gekennzeichnet, dass** das pendelnde Messer (7) nach einem Spiralweg bewegbar ist, während der Block (2) stationär gehalten wird.

2. Anlage nach Anspruch 1, **dadurch gekennzeichnet, dass** sie eine Vielzahl von Formungskernen (4) umfasst, die im Kasten (1) angeordnet und ausgelegt sind, um die Kanten des innerhalb des Kastens (1) erzeugten Blocks (2) aus Schaum zu umrunden.

3. Anlage nach Anspruch 2, **dadurch gekennzeichnet, dass** die Kerne (4) dieser Vielzahl zumindest teilweise entfernbar sind.

4. Anlage nach einem der vorhergehenden Ansprüche, **dadurch gekennzeichnet, dass** sie eine Aufbereitungseinheit (12) der durchgehenden Platte (6) umfasst, wobei die Aufbereitungseinheit (12) eine Abrollstation (13) umfasst, die ausgelegt ist, um die durchgehende Platte (6), die in einer Spirale angeordnet ist, abzurollen, und eine Verlegestation (14), die ausgelegt ist, um die durchgehende Platte (6) in sich überlappenden Schichten anzuordnen.

5. Anlage nach Anspruch 4, **dadurch gekennzeichnet, dass** die Abrollstation (13) zwei Bandförderer (15, 16) mit jeweils geneigten Entwicklungsebenen (P15, P16) umfasst.

6. Anlage nach Anspruch 5, **dadurch gekennzeichnet, dass** mindestens einer der beiden Bandförderer (15, 16) bewegbar ist, um die Neigung seiner eigenen Ausdehnungsebene (P15, P16) in Bezug auf die Ausdehnungsebene (P15, P16) des anderen der Bandförderer (15, 16) zu variieren.

7. Anlage nach einem der vorhergehenden Ansprüche, **dadurch gekennzeichnet, dass** sie eine Trägerbasis (9) des Blocks (2) aus Schaum umfasst, die an einem Einlass des Kopierschneidwerkzeugs (5) platziert ist, wobei die Trägerbasis (9) ausgelegt ist, um den Block (2) aus Schaum rund um eine vertikale Achse zu drehen und den Block (2) aus Schaum in das Kopierschneidwerkzeug (5) zu führen.

8. Anlage nach einem der vorhergehenden Ansprüche, **dadurch gekennzeichnet, dass** sie eine optische Vorrichtung umfasst, die ausgelegt ist, um auf den zu schneidenden Block (2) das Bild des Spiralwegs zu projizieren, dem das Messer (7) zu folgen hat.

9. Anlage nach einem der vorhergehenden Ansprüche, **dadurch gekennzeichnet, dass** sie eine Verpackungsstation (21) zum Verpacken der durchgehenden Platte (6), die in sich überlappenden Schichten angeordnet ist, umfasst, wobei die Verpackungsstation (21) eine Pressvorrichtung (22) umfasst, die ausgelegt ist, um die in Schichten positionierte durchgehende Platte (6) zu komprimieren und deren Gesamtgröße zu reduzieren.

10. Anlage nach einem der vorhergehenden Ansprüche, **dadurch gekennzeichnet, dass** sie zwei Schwenkköpfe (8) umfasst, an denen jeweilige Längsenden des Messers (7) fixiert sind, wobei die Schwenkköpfe (8) ausgestaltet sind, um die Pendelbewegung, mittels derer das Messer (7) die jeweilige Schneidwirkung auf den Block (2) ausübt, auf das Messer (7) zu übertragen.

11. Anlage nach Anspruch 10, **dadurch gekennzeichnet, dass** die Schwenkköpfe (8) auch ausgelegt sind, um die Drahtplatte (7) entlang des Spiralwegs zu bewegen.

12. Verfahren zur Herstellung von Plattenmaterial, umfassend die folgenden Schritte:
- Bereitstellen eines Formungskastens (1) in Form eines Parallelflachs zum Ausformen eines Blocks (2) aus viskoelastischem Material;
- Gießen einer bestimmten Menge von viskoelastischem Material in flüssiger Form in den Kasten (1);
- Abwarten eines bestimmten Zeitraums bis zum Abschluss des Expansionsprozesses und der Ausformung des Blocks (2) aus Schaum;
- Herausziehen des geformten Blocks (2) aus Schaum aus dem Kasten;
- Schneiden des Blocks (2) aus Schaum mit einem durchgehenden Schnitt, der sich entlang eines Spiralwegs ausdehnt, ausgelegt, um aus dem Block (2) eine durchgehende Platte (6) mit einer im Wesentlichen konstanten Dicke zu erhalten, **dadurch gekennzeichnet, dass** der Schritt zum Schneiden des Blocks (2) mit einem durchgehenden Schnitt von einem Messer (7) mit einer Pendelbewegung durchgeführt wird und den Schritt zum Bewegen des Messers (7) mit einer Pendelbewegung nach dem Spiralweg umfasst, wobei der Block (2) stationär gehalten wird.

13. Verfahren nach Anspruch 12, **dadurch gekennzeichnet, dass** der Schritt zum Bereitstellen eines Formungskastens (1) in Form eines Parallelflachs den Schritt zum Anordnen einer Vielzahl von Formungskernen (4) im Kasten (1) umfasst, die geeignet sind, um die Kanten des Parallelflachs zu umrunden.

14. Verfahren nach Anspruch 12 oder 13, **dadurch gekennzeichnet, dass** der Schritt zum Schneiden des Schaumblocks (2) mit einem Pendeldrahtmesser (7) durchgeführt wird.

15. Verfahren nach einem der Ansprüche 12 bis 14, **dadurch gekennzeichnet, dass** es den Schritt zum Abrollen der durchgehenden, in einer Spirale angeordneten Platte (6) umfasst.

## Revendications

1. Installation pour la production de matériau en feuilles, comprenant :
- un châssis de moulage parallélépipédique (1) pour former un bloc (2) de mousse viscoélastique à partir d'une quantité déterminée de matériau viscoélastique sous forme fluide ;
- une machine d'oxycoupage (5), comprenant une lame (7) à mouvement alternatif, configurée pour effectuer une coupe en spirale dudit bloc de mousse (2) de manière à former une feuille continue (6) à partir dudit bloc de mousse (2) avec ladite feuille (6) positionnée en forme de spirale, **caractérisée en ce que** ladite lame (7) à mouvement alternatif est mobile selon une trajectoire en spirale tandis que ledit bloc (2) est maintenu immobile.

2. Installation selon la revendication 1, **caractérisée en ce qu'**elle comprend une pluralité de noyaux (4) de formage disposés à l'intérieur dudit châssis (1) et configurés pour arrondir les bords du bloc (2) de mousse généré à l'intérieur dudit châssis (1).

3. Installation selon la revendication 2, **caractérisée en ce que** lesdits noyaux (4) de ladite pluralité sont au moins partiellement amovibles.

4. Installation selon l'une quelconque des revendications précédentes, **caractérisée en ce qu'**elle comprend une unité de conditionnement (12) de ladite feuille continue (6), ladite unité de conditionnement (12) comprenant un poste de déroulement (13) configuré pour dérouler ladite feuille continue (6) disposée en spirale, et un poste de superposition (14) configuré pour disposer ladite feuille continue (6) en couches superposées.

5. Installation selon la revendication 4, **caractérisée en ce que** ledit poste de déroulement (13) comprend deux transporteurs à bande (15, 16) dotés de plans de développement inclinés (P15, P16) respectifs.

6. Installation selon la revendication 5, **caractérisée en ce qu'**au moins un desdits deux transporteurs à bande (15, 16) est mobile pour faire varier l'inclinaison de son propre plan (P15, P16) d'extension par rapport au plan (P15, P16) d'extension de l'autre de desdits transporteurs à bande (15, 16).

7. Installation selon l'une quelconque des revendications précédentes, **caractérisée en ce qu'**elle comprend une base de support (9) dudit bloc (2) de mousse placé à une entrée de ladite machine d'oxycoupage (5), ladite base de support (9) étant configurée pour faire tourner ledit bloc (2) de mousse autour d'un axe vertical et pour alimenter ledit bloc (2) de mousse à l'intérieur de ladite machine d'oxycoupage (5).

8. Installation selon l'une quelconque des revendications précédentes, **caractérisée en ce qu'**elle comprend un dispositif optique configuré pour projeter, sur ledit bloc (2) à découper, l'image de la trajectoire en spirale que doit suivre ladite lame (7).

9. Installation selon l'une quelconque des revendications précédentes, **caractérisée en ce qu'**elle comprend un poste d'emballage (21) pour l'emballage de ladite feuille continue (6) disposée en couches superposées, ledit poste d'emballage (21) comprenant un dispositif de pressage (22) configuré pour comprimer ladite feuille continue (6), positionnée en couches, en diminuant sa taille globale.

10. Installation selon l'une quelconque des revendications précédentes, **caractérisée en ce qu'**elle comprend deux têtes oscillantes (8) auxquelles sont fixées les extrémités longitudinales respectives de ladite lame (7), lesdites têtes oscillantes (8) étant conçues pour imprimer à ladite lame (7) ledit mouvement alternatif au moyen duquel ladite lame (7) exerce l'action de coupe relative sur ledit bloc (2).

11. Installation selon la revendication 10, **caractérisée en ce que** lesdites têtes oscillantes (8) sont également configurées pour déplacer ladite lame à fil (7) le long de ladite trajectoire en spirale.

12. Procédé de production de matériau en feuilles, comprenant les étapes de :
- fournir un châssis parallélépipédique (1) pour former un bloc (2) de mousse en matériau viscoélastique ;
- verser dans ledit châssis (1) une quantité prédéterminée de matériau viscoélastique sous forme fluide ;
- attendre pendant un temps prédéterminé l'achèvement du processus d'expansion et la formation du bloc (2) de mousse ;
- extraire ledit bloc formé (2) de mousse du châssis ;
- couper ledit bloc (2) de mousse avec une coupe continue s'étendant le long d'une trajectoire en spirale, configuré pour obtenir à partir dudit bloc (2) une feuille continue (6) d'une épaisseur sensiblement constante, **caractérisé en ce que** ladite étape de coupe dudit bloc (2) avec une coupe continue est actionnée par une lame (7) à mouvement alternatif et comprend l'étape consistant à déplacer ladite lame (7) à mouvement alternatif selon ladite trajectoire en spirale en maintenant ledit bloc (2) immobile.

13. Procédé selon la revendication 12, **caractérisé en ce que** ladite étape consistant à fournir un châssis de formage parallélépipédique (1) comprend l'étape consistant à disposer à l'intérieur dudit châssis (1) une pluralité de noyaux de formage (4) aptes à arrondir les bords dudit parallélépipède.

14. Procédé selon la revendication 12 ou 13, **caractérisé en ce que** l'étape de coupe dudit bloc de mousse (2) est effectuée à l'aide d'une lame à fil (7) à mouvement alternatif.

15. Procédé selon l'une quelconque des revendications 12 à 14, **caractérisé en ce qu'**il comprend l'étape consistant à dérouler ladite feuille continue (6) disposée en spirale.
